# EUROPÄISCHE PATENTSCHRIFT

(11) **EP 0 476 300 B1**
(45) Veröffentlichungstag und Bekanntmachung des Hinweises auf die Patenterteilung: **25.01.1995**
(21) Anmeldenummer: 91113558.0
(22) Anmeldetag: 13.08.1991
(51) Int. Cl.: B01D 53/34, B01D 53/10

(54) **Verfahren und Vorrichtung zur Adsorption bzw. Chemiesorption von gasförmigen Bestandteilen aus einem Gasstrom**
Process and device for adsorption or chemisorption of gaseous components of a gas stream
Procédé et dispositif pour l'adsorption, physique ou chimique, des components d'un courant de gaz

(30) Priorität: 17.09.1990 DE 4029395
(43) Veröffentlichungstag der Anmeldung: 25.03.1992
(73) Patentinhaber: WALTHER & CIE. AKTIENGESELLSCHAFT, D-51069 Köln (DE)
(72) Erfinder: Ruoff, Günter, Dipl.-Ing., W-5000 Köln 80 (DE)

(56) Entgegenhaltungen:
- DE-A- 3 801 913
- DE-A- 3 925 818
- FR-A- 2 306 726

## Beschreibung

Die Erfindung betrifft ein Verfahren und eine Vorrichtung zur Adsorption oder Chemiesorption von gasförmigen Stoffen aus einem Rohgasstrom durch Zugabe von trockenen Adsorbentien oder von Adsorbentien mit Eigenschaften, die eine chemische Reaktion mit den adsorbierten Gaskomponenten bewirken, wobei das Rohgas und das frische Adsorbens einer Abscheideanlage mit mehreren als Schlauchfilter ausgebildeten Gewebefilterkammern zugeführt wird, in denen eine Staubrückführung mit einer Rezirkulation des 20 bis 80-fachen des eingesetzten Frischadsorbens erfolgt und im Schlauchfilter ein Teil des Gases mittels eines Fangschachtes mit zugeordneter Düse in Zirkulation gehalten wird und dabei abgeschiedener Staub nach seiner Abreinigung an der Rezirkulation teilnimmt.

Mit einem derartigen Verfahren soll mit möglichst geringem Investitionsaufwand und unter Vermeidung komplizierter und aufwendiger Einrichtungen für die Staubrückführung der Ausnutzungsgrad für das Adsorbens bei Trockenverfahren erhöht werden. Dieses Verfahren und eine Vorrichtung zur Durchführung des Verfahrens sind beschrieben in DE-A-38 01 913 und DE-A-38 06 862. Sie dienen der Adsorption bzw. Chemiesorption von gasförmigen Stoffen aus einem Gasstrom. Ein wesentliches Verfahrensmerkmal ist die Staubrückführung innerhalb eines Gewebefilters, die dadurch erreicht wird, daß im Unterteil des Gewebefilters eine Kombination bestehend aus Düse und Fangschacht angeordnet ist, wodurch sowohl eine veränderbare Gasrückführung als auch eine in weiten Grenzen veränderbare Staubrückführung bewirkt werden.

Sowohl das Verfahren als auch die Vorrichtung, lassen Nachteile erkennen, die nachfolgend anhand des Standes der Technik näher aufgezeigt werden.

Der Erfindung liegt die Aufgabe zugrunde, die Nachteile der bekannten Verfahren und Vorrichtungen zu vermeiden und sowohl die gewünschte Staubrückführquote einzuhalten als auch das verbrauchte Adsorbens aus dem Prozeß auszuschleusen und dabei die Herstellungskosten für die Vorrichtung weiter zu senken.

Diese Aufgabe wird dadurch gelöst, daß zur Abscheidung der Reaktionsprodukte eine der Gewebefilterkammern abwechselnd im Off-Line-Betrieb abgereinigt und gleichzeitig mindestens eine Gewebefilterkammer im On-Line-Betrieb gefahren wird und daß eine Abführung des verbrauchten Adsorbens im On-Line-Betrieb nicht erfolgt.

In weiterer Ausgestaltung des Verfahrens wird vorgeschlagen, daß für den Off-Line-Betrieb einer Gewebefilterkammer die dazugehörige Rohgaszufuhr und gegebenenfalls die zugehörige Reingasabfuhr verschlossen werden und während dieser Zeit ein Teil oder alle Schläuche des Gewebefilters in an sich bekannter Weise abgereinigt werden. Dabei kann zur Aufrechterhaltung des eingestellten Verhältnisses von Staubrückführung zu Frischadsorbens der Zyklus des Off-Line-/On-Line-Betriebes so gewählt werden, daß durch Abreinigung einer bestimmten Teilmenge der in einer Kammer vorhandenen Schläuche gerade soviel Staub ausgetragen wird, wie während der Dauer des On-Line-Betriebes an Frischadsorbens zugeführt worden ist.

Vorteile und Wirkungen der Erfindung sowie die Nachteile des bekannten, werden nachfolgend anhand der Zeichnung aufgezeigt und näher erläutert. Es zeigen:
- Fig. 1: einen Querschnitt durch den Gegenstand nach dem Stand der Technik,
- Fig. 2: eine vergrößerte Darstellung nach Fig. 1,
- Fig. 3: eine Vorrichtung zur Durchführung des erfindungsgemäßen Verfahrens,
- Fig. 4.: eine Draufsicht auf die Vorrichtung gemäß Fig. 3 mit mehreren Filterkammern.

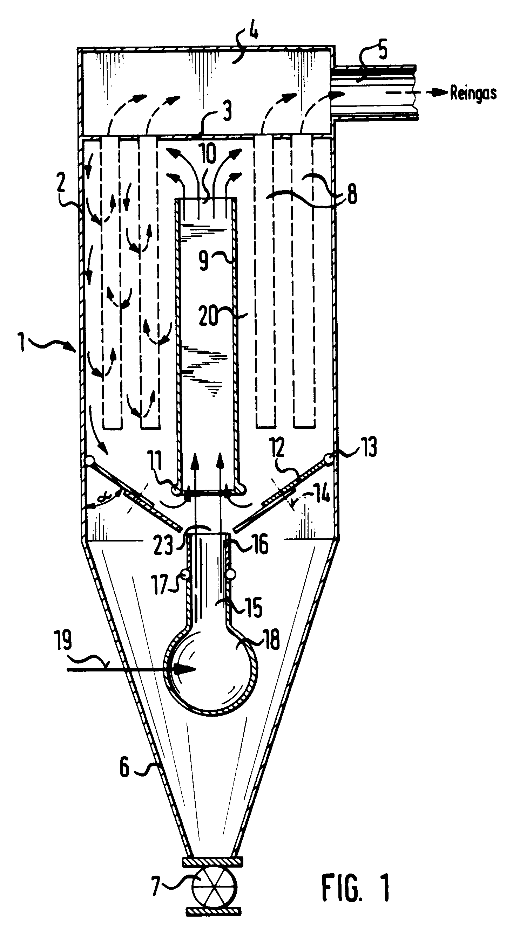

Fig. 1 zeigt ein als Schlauchfilter 1 dargestelltes Gewebefilter. Das Schlauchfilter besteht aus einem rechteckigen Gehäuse 2 mit einem oberen Boden 3, in den die Filterschläuche 8 eingehängt sind. Innerhalb einer Gesamtfilteranlage werden die Gehäuse 2 auch als Kammern bezeichnet. Oberhalb des Bodens 3 ist eine Reingaskammer 4 mit einem Reingaskanal 5 vorgesehen, aus dem das Reingas austritt. Am unteren Ende ist ein Staubsammelbunker 6 mit einer Austrittsschleuse 7 vorgesehen. Die Filterschläuche 8 sind um einen zentralen Freiraum 20 angeordnet, in dem sich ein rechteckiger Fangschacht 9 befindet. Dieser ist mit seinem oberen Ende 10 mit einem bestimmten Abstand zum oberen Filterboden 3 angeordnet. Mit Abstand zum unteren Ende 11 des Fangschachtes 9 sind geneigte Staubführungsbleche 12 vorgesehen, die in Gelenken 13 am Gehäuse 2 des Filters befestigt sind. Sie sind so angeordnet, daß sie einmal eine innere Öffnung 23 und zum anderen gemeinsam mit der Unterkante 11 des Fangschachtes 9 einen Spalt 24 bilden. Durch Verstellen des Neigungswinkels alpha der Staubführungsbleche 12 kann der Spalt 24 verlängert werden. Unterhalb der Öffnung 23 ist eine Düse 15 vorgesehen, deren Düsenquerschnitt durch Verstellung der oberen Düsenwände 16 verändert werden kann. Zu diesem Zweck sind die Düsenwände 16 mit Gelenken 17 versehen. An der unteren Seite der Düse 15 ist der Rohgaskanal 18 angeschlossen, in den das Adsorbens mittels einer Leitung 19 fein verteilt eingeführt wird.

Das Rohgas mit dem darin befindlichen Adsorbens gelangt über die Düse 15 und den Fangschacht 9 und von dort in den oberen Bereich der Filterschläuche 8. Das Gas wird durch die Filterschläuche hindurchgeführt und so vom Staub weitgehend befreit. Dabei bildet sich auf der Oberfläche der Schläuche 8 eine Staubschicht wachsender Dicke, die nach den bekannten Methoden in bestimmten Zeitabständen abgereinigt werden. Das von Staub und Schadstoffen weitgehend befreite Reingas verläßt das Filter 1 über die Reingaskammer 4 und den Reingasstutzen 5. Die für den Prozeß erforderliche Menge an frischem Adsorbens wird unmittelbar vor Eintritt in die Filterkammer durch geeignete Vorrichtungen dem Rohgasstrom zugemischt. Es ist denkbar, das Adsorbens an anderer geeigneter Stelle dem System zuzuführen, z.B. hinter der Düse 15. Aus dem Rohgaskanal 18 der sich in Strömungsrichtung verjüngen kann, tritt das staubbeladene Rohgas nach oben durch einen Schlitz von der Breite 25 aus und wird durch die seitlichen Begrenzungswände 16 zu einem gerichteten Strahl geformt. Mittels der Gelenke 17 können die Wände 16 in ihrer Richtung verändert werden. Der Gasaustritt aus der Schlitzdüse 15 von der ursprünglichen Breite 25 kann auf die verringerte Breite 26 verändert werden. Der Abstand der Düse 15 zum unteren Ende 11 des Fangschachtes 9 ist nach den allgemeinen bekannten Methoden ermittelt. Der Abstand 27 der Wände des Fangschachtes 9 ist größer als der Abstand 25 der Wände der Düse 15. Der bei der Abreinigung der Schläuche nach unten fallende Staub wird zu einem Teil vom rückgeführten Gasstrom mitgenommen, zum anderen Teil verläßt er das innere Rückführungssystem durch verstellbare Öffnungen oder Schlitze 28 in den Staubführungsblechen 12 und wird im Bunker 6 des Filters 1 gesammelt und über die Schleuse 7 ausgetragen. Ein weiterer Anteil des abgeschiedenen Staubes gleitet über die Staubführungsbleche 12 und fällt über dessen Vorderkante in den aus der Dose 15 austretenden Gasstrom, der diesen Staubanteil in das System unter Vermischung mit dem Gas zurückführt. Die staubführenden Bleche 12 bestehen aus zwei Teilen, die an ihren Enden mit Langlöchern versehen sind und nach ihrer Justierung mit Hilfe einer Schraubverbindung 14 fixiert werden. Durch Änderung der Länge 29 kann ein zusätzlicher Staubanteil aus dem Kreislaufsystem entfernt und dem Bunker 6 zugeführt werden und umgekehrt.

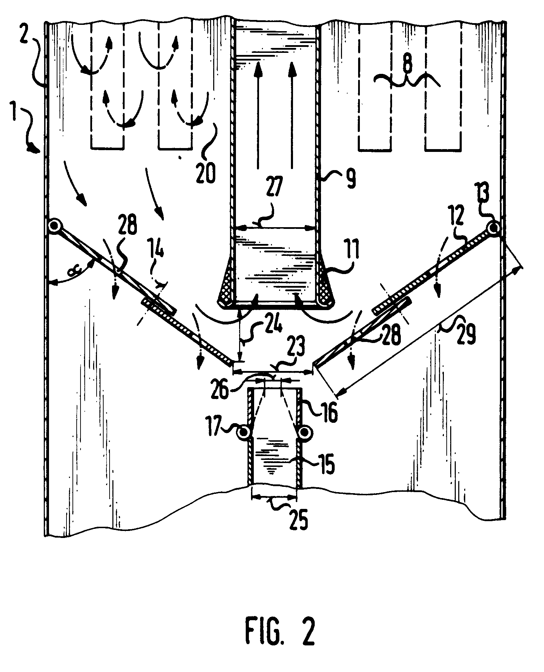

Bei der Durchführung dieses Verfahrens unter Benutzung der erfindungsgemäßen Vorrichtung werden jedoch Nachteile erkennbar. Fig. 1 und Fig. 2 zeigen den Stand der Technik nach den oben zitierten Patenten und werden hier benutzt, um die vorerwähnten Nachteile zu erläutern.

Die Staubführungsbleche 12 sind in Fig. 1 und Fig. 2 mit einem Neigungswinkel alpha von ca. 45° dargestellt. Viele Stäube neigen jedoch dazu, Ansätze oder Ablagerungen an geneigten, ebenen Wänden zu bilden, so daß die hier dargestellte Neigung oft nicht ausreicht, um bei allen Betriebszuständen das Abfließen des Staubes sicherzustellen. Eine dann notwendige steilere Anordnung der Bleche 12 würde jedoch dazu führen, daß - insbesondere bei großen Filterkammern mit einer großen Anzahl von nebeneinander liegenden Schlauchreihen - das Unterteil des Filtergehäuses erheblich verlängert werden müßte. Um sicherzugehen, daß bei allen Betriebszuständen der Staub ordnungsgemäß abfließt, müßte man Neigungswinkel anwenden, wie sie im Unterteil des Filtergehäuses an den Bunkerwänden 6 dargestellt sind. Aus Fig. 1 ist ohne weitere Erläuterung zu erkennen, daß dann die Düse 15 und der Rohgaskanal 18 erheblich nach unten verlegt werden müßten mit der Konsequenz, daß auch die Bunkerwände 6 entsprechend tiefer an das Gehäuse 2 angesetzt werden müßten, um Platz für Düse 15 und Rohgaskanal 18 zu schaffen. Eine solche Maßnahme würde zu ganz erheblichen Mehrkosten führen.

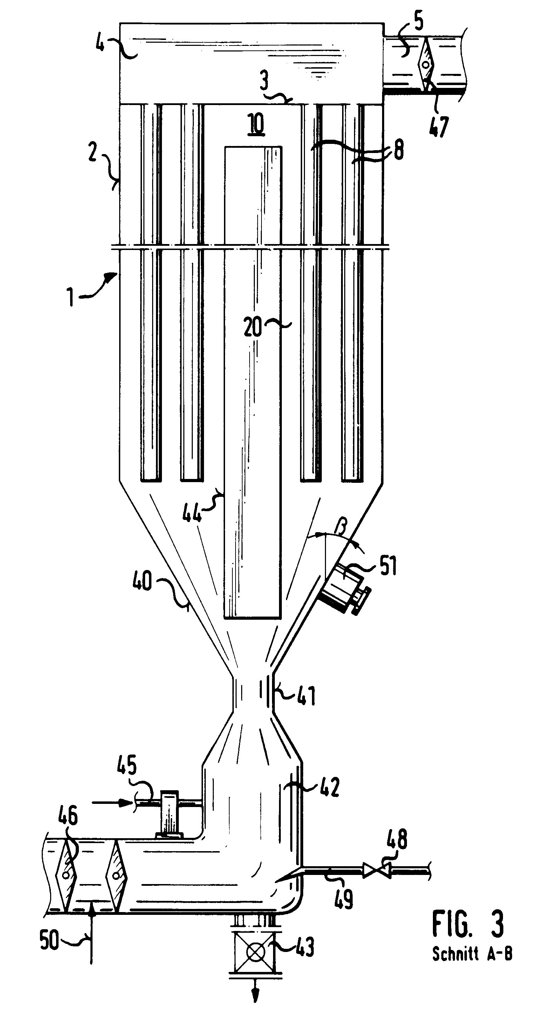

Dieser Nachteil kann nach der vorliegenden Erfindung dadurch vermieden werden, daß die ursprünglich als Bunkerwände gedachten Teile 6 (Fig. 1) die Funktion der Staubführungsbleche mit übernehmen (40 in Fig. 3).

Damit der an der neuen Bunkerwand 40 abfließende Staub von der Düse erfaßt und zurückgeführt werden kann, muß diese nun entsprechend tiefer und somit aus dem Filtergehäuse herausgelegt werden. Die Düse 41 kann jetzt auch mit den Bunkerwänden 40 fest verbunden werden. Das Strahlrohr 44 wird ebenfalls entsprechend nach unten verlegt, um den Rückführeffekt unverändert aufrecht zu erhalten. Der mit der Düse fest verbundene Rohgaskanal 42 wird ebenfalls aus dem Filtergehäuse heraus und nach unten verlegt und für die Ausschleusung des verbrauchten Adsorbens mit einem Austragsorgan 43 (z.B. Zellradschleuse) versehen.

Diese erfindungsgemäße Maßnahme führt dazu, daß nicht nur die Staubführungsbleche 12 (Fig. 1) sondern auch die Gelenke 13 sowie die für die Neigungsverstellung und die Verstellung der Schlitzgrößen (Fig. 2) erforderlichen Einrichtungen wegfallen, sondern auch zusätzlich das gesamte Filtergehäuse bei steilerem Neigungswinkel trotzdem kleiner konstruiert werden kann. Dies führt insgesamt zu einer sehr erheblichen Kosteneinsparung.

Bei der älteren Ausführung ist die Düse 15 mit automatischen Verschlußklappen 16 versehen, die sich im Störfalle schließen um das Eindringen von größeren Staubmengen in Düse 15 und Rohgaskanal 18 zu verhindern. Aufgrund der erfindungsgemäßen Vorrichtung entfallen auch diese Verschlußklappen, da das verbrauchte Adsorbens erfindungsgemäß ohnehin im Off-Line-Betrieb durch Düse 41 und Rohgaskanal 42 (Fig. 3) über das Organ 43 ausgetragen wird. Dies führt zu einer weiteren Kosteneinsparung. Gleichzeitig entfallen die Gelenke 17. Derartige Drehteile sind in einem Entstaubungsbetrieb immer störanfällig. Ihr Fortfall gewährleistet einen sicheren Betriebsablauf.

Die eben geschilderte vorrichtungsseitige Lösung der Aufgabe, den Staubabfluß an den Staubführungsblechen in allen Betriebszuständen kostensparend sicherzustellen, führt jedoch zu dem Problem, daß nunmehr die Abführung des verbrauchten Adsorbens während des Betriebes nicht mehr möglich ist. Die sich daraus ergebende zweite Aufgabe dieser Erfindung besteht deshalb darin, durch verfahrenstechnische Änderungen sowohl die Einhaltung der gewünschten Staubrückführquote zu ermöglichen als auch das verbrauchte Adsorbens aus dem Prozeß auszuschleudern.

Nach dem bisherigen Stand der Technik (DE-A-38 01 913 und DE-A-38 06 862) wurden nämlich das Verhältnis Staubrückführung zu eingesetztem Frischgut durch die Verstellung der Öffnungen 28 in den Staubführungsblechen 12 (Fig. 2) geregelt und die überschüssige Staubmenge kontinuierlich am Filterbunker 6 mit Hilfe eines Austragsorgans 7 (Fig. 2) abgezogen. Die Vorrichtung gemäß vorliegender Erfindung verfügt jedoch nicht mehr über die Schlitze 28 (Fig. 2) und die strömungsfreie Zone im Unterteil des Bunkers 6 (Fig. 1), die beide notwendig sind, um während der Gasdurchströmung das verbrauchte Adsorbens unter Aufrechterhaltung der gewünschten Rückführrate kontinuierlich abziehen zu können.

Erfindungsgemäß wird nun der Austrag des verbrauchten Adsorbens dadurch ermöglicht, daß in vorwählbaren Zyklen jeweils eine Filterkammer stillgesetzt und auf der Gaseintritts- und der Gasaustrittsseite durch Klappen 46, 47 (Fig. 3) verschlossen wird. Abgereinigter Staub kann jetzt durch die nicht mehr durchströmte Düse 41 und die Rohgasleitung 42 zu dem Austragsorgan 43 (Fig. 3) gelangen, um dort ausgetragen zu werden.

Weiterhin wird erfindungsgemäß das gewünschte Staubrückführungsverhältnis dadurch aufrechterhalten, daß der Zyklus des Off-/On-Line-Betriebs so gewählt wird, daß durch Abreinigung einer bestimmten Teilmenge der in einer Kammer vorhandenen Schläuche gerade so viel Staub während des Off-Line-Betriebes ausgetragen wird, wie während der Dauer des On-Line-Betriebs an Frischadsorbens zugeführt worden ist. Die Regelung dieses Vorgangs erfolgt über eine programmierte Steuerung, die - von dem Produkt aus zugeführter Frischadsorbensmenge x Zeit ausgehend - festlegt, nach welcher Zeit die nächste Off-Line-Abreinigung einer bestimmten Teilmenge der vorhandenen Schläuche zu erfolgen hat und diesen Vorgang auslöst. Selbstverständlich wird für die Dauer der Off-Line-Periode der Sorbenseintrag 45 für die betreffende Kammer durch die programmierbare Steuerung unterbrochen.

Nach erfolgter Abreinigung (im Off-Line-Betrieb) werden die Klappen 46 und 47 (Fig. 3) wieder geöffnet und damit die Durchströmung des Filtersystems wieder freigegeben. Gleichzeitig wird über die Leitung 45 wieder Frischsorbens aufgegeben und eine bestimmte Teilmenge der Schlauchreihen abgereinigt, um die Staubrückführung unverzüglich wieder herzustellen.

Im On-Line-Betrieb wird zur Aufrechterhaltung der Staubrückführung eine einstellbare Teilmenge von Schläuchen in ebenfalls einstellbarem Zeitabstand abgereinigt und der herabfallende Staub durch den Düsenstrahl dem Kreislauf zugeführt. Das gewünschte Staubrückführverhältnis wird durch geeignete Wahl von Zeitabstand und Größe der Teilmenge der jeweils abzureinigenden Schläuche eingestellt.

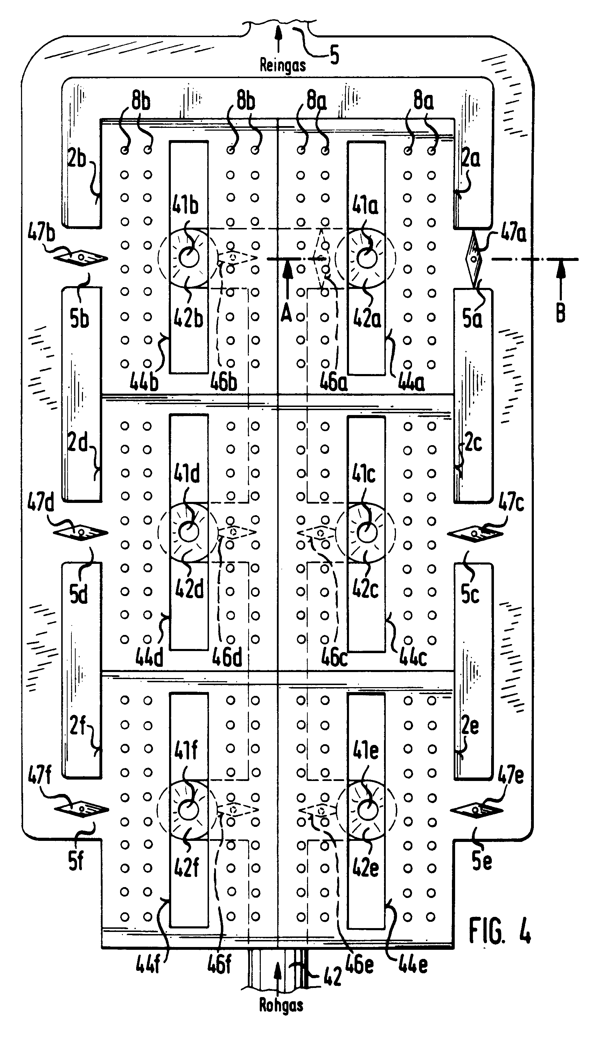

Der On-Line/Off-Line-Zyklus wird gemäß Fig. 4 beschrieben. Hier sind sechs Filterkammern 2a bis 2f dargestellt, die einzeln dem Gegenstand nach Fig. 3 entsprechen. Soll beispielsweise die Filterkammer 2a abgereinigt werden, dann werden die Rohgasklappe 46a und die Reingasklappe 47a geschlossen. Außerdem wird der Adsorbenseintrag 45 für diese Kammer abgestellt. Die übrigen Filterkammern 2b bis 2f bleiben im On-Line-Betrieb, d.h. die Klappen 47b bis 47f und 46b bis 46f bleiben geöffnet. Bei dieser beschriebenen Klappenstellung kann die Filterkammer 2a mit den Filterschläuchen 8a in an sich bekannter Weise programmgemäß abgereinigt werden. Nach Ablauf des eingestellten Programms wird die Kammer 2a wieder in den On-Line-Betrieb genommen und gleichzeitig die nächste Kammer, z.B. die Kammer 2b im Off-Line-Betrieb abgereinigt. In gleicher Weise werden alle übrigen Kammern abgereinigt.

Die Bunkerwände 40 sind unter einem Winkel beta verlegt, der dem auszuscheidenden Staub angepaßt ist. Zum besseren Austrag des Staubes können die Bunkerwände mit Belüftungswänden (nicht dargestellt) oder Klopf- bzw. Vibrationsvorrichtungen 51 ausgerüstet sein. Eine weitere Einrichtung zum besseren Staubaustrag wird in einer Belüftungsleitung 49 mit Ventil 48 gesehen, womit der Staub im unteren Teil der Leitung 42 aufgelockert und damit fließfähiger gemacht werden kann. Die Rohgasklappe 46 kann als Einzel- oder als Doppelklappe ohne oder mit Sperrluftzufuhr 50 ausgebildet sein.

## Patentansprüche

1. Verfahren zur Adsorption oder Chemiesorption von gasförmigen Stoffen aus einem Rohgasstrom durch Zugabe von trockenen Adsorbentien oder von Adsorbentien mit Eigenschaften, die eine chemische Reaktion mit den adsorbierten Gaskomponenten bewirken, wobei das Rohgas und das frische Adsorbens einer Abscheideanlage mit mehreren als Schlauchfilter ausgebildeten Gewebefilterkammern zugeführt wird, in denen eine Staubrückführung mit einer Rezirkulation des 20 bis 80-fachen des eingesetzten Frischadsorbens erfolgt und im Schlauchfilter ein Teil des Gases mittels eines Fangschachtes mit zugeordneter Düse in Zirkulation gehalten wird und dabei abgeschiedener Staub nach seiner Abreinigung an der Rezirkulation teilnimmt, dadurch gekennzeichnet, daß zur Abscheidung der Reaktionsprodukte eine der Gewebefilterkammern abwechselnd im Off-Line-Betrieb abgereinigt und gleichzeitig mindestens eine Gewebefilterkammer im On-Line-Betrieb gefahren wird und daß eine Abführung des verbrauchten Adsorbens im On-Line-Betrieb nicht erfolgt.

2. Verfahren nach Anspruch 1, dadurch gekennzeichnet, daß für den Off-Line-Betrieb einer Gewebefilterkammer die dazugehörige Rohgaszufuhr und gegebenenfalls die zugehörige Reingasabfuhr verschlossen werden und während dieser Zeit ein Teil der oder alle Schläuche des Gewebefilters in an sich bekannter Weise abgereinigt werden.

3. Verfahren nach den Ansprüchen 1 und 2, dadurch gekennzeichnet, daß zur Aufrechterhaltung des eingestellten Verhältnisses von Staubrückführung zu Frischadsorbens der Zyklus des Off-Line/On-Line-Betriebes so gewählt wird, daß durch Abreinigung einer bestimmten Teilmenge der in einer Kammer vorhandenen Schläuche gerade so viel Staub ausgetragen wird, wie während der Dauer des On-Line-Betriebs an Frischadsorbens zugeführt worden ist.

4. Vorrichtung zur Durchführung des Verfahrens nach den Ansprüchen 1 und 2 mit in den einzelnen Gewebefilterkammern (2a-2f) vorgesehenen Schlauchfiltern mit mehreren, einen zentralen Freiraum 20 umgebenden Filterschläuchen 8, einer oberen Reingaskammer 4 und einem unteren Staubaustrag 6, 7, wobei innerhalb des Freiraumes 20 mit Abstand zur Reingaskammer 4 ein Fangschacht 9 angeordnet ist, dem am unteren Ende mit Abstand symmetrisch eine am Rohgaskanal angeschlossene Düse 41 zugeordnet ist, wobei unterhalb des Fangschachtes 9 ein geneigter Boden 12 mit Öffnung 28 vorgesehen ist, dadurch gekennzeichnet, daß der geneigte Boden 40 im Bereich seiner Öffnung fest mit der Düse 41 verbunden im untere,Teil des Rohgaskanales 42 eine Austrittsschleuse 43 und eine Steuerung für den Off-/On-Line-Betrieb vorgesehen ist.

## Claims

1. Method for the adsorption or chemisorption of gaseous substances from a crude gas stream through the addition of dry adsorbents or of adsorbents with properties which give rise to a chemical reaction with the adsorbed gas constituents, the crude gas and the fresh adsorbent being supplied to a separating unit with a plurality of cloth filter chambers which are formed as bag filters and in which dust recycling takes place with a recirculation of 20 to 80 times the fresh adsorbent which is used, some of the gas being maintained in circulation in the bag filter by means of a collecting shaft with an associated nozzle and separated dust taking part in the recirculation after being cleaned off, characterised in that, in order to separate the reaction products, one of the cloth filter chambers is alternately cleaned in off-line mode and at least one cloth filter chamber is simultaneously operated in on-line mode, and that the adsorbent which has been used is not drawn off in on-line mode.

2. Method according to claim 1, characterised in that the associated crude gas supply and, if applicable, the associated treated gas outlet are closed for the off-line mode of a cloth filter chamber and during this time some or all of the bags of the cloth filter are cleaned in a manner which is known per se.

3. Method according to claims 1 and 2, characterised in that, in order to maintain the set ratio of dust recycling to fresh adsorbent, the off-line/on-line mode cycle is selected such that, by cleaning a certain sub-quantity of the bags provided in one chamber, exactly the same amount of dust is discharged as fresh adsorbent is supplied during the on-line mode period.

4. Device for carrying out the method according to claims 1 and 2 with bag filters which are provided in the individual cloth filter chambers (2a-2f) and have a plurality of filter bags 8, which surround a central free space 20, an upper treated gas chamber 4 and a lower dust discharge part 6, 7, a collecting shaft 9 being arranged at a spacing from the treated gas chamber 4 inside the free space 20, with the lower end of which shaft a nozzle 41, which is connected to the crude gas duct, is symmetrically associated at a spacing, and an inclined base plate 12 with an opening 28 being provided below the collecting shaft 9,
characterised in that the inclined base plate 40 is rigidly connected to the nozzle 41 in the area of its opening, and an outlet lock-type element 43 and a control for the off-/on-line mode are provided in the lower part of the crude gas duct 42.

## Revendications

1. Procédé pour extraire, par adsorption physique ou par adsorption chimique (chimisorption) des substances gazeuses d'un courant de gaz brut, par addition d'adsorbants secs ou d'adsorbants doués de propriétés leur permettant de susciter une réaction chimique avec les constituants gazeux adsorbés, procédé selon lequel le gaz brut et l'adsorbant frais sont acheminés à une installation séparatrice comportant plusieurs compartiments à toile filtrante réalisés sous forme d'un filtre à manche, compartiments dans lesquels a lieu un recyclage de la poussière avec une recirculation d'une quantité représentant vingt à quatre-vingts fois l'adsorbant frais introduit, une partie du gaz étant maintenue en circulation dans le filtre à manche à l'aide d'une cheminée de collecte à laquelle une buse est associée et, après sa séparation par dépoussiérage, la poussière ainsi séparée participant à la recirculation, procédé caractérisé en ce que, pour séparer les produits de la réaction, l'un des compartiments à étoffe filtrante est alternativement soumis à nettoyage par dépoussiérage dans un fonctionnement autonome hors-circuit et, simultanément, au moins un compartiment à étoffe filtrante fonctionne en service en ligne ou en circuit et en ce qu'une évacuation de l'adsorbant épuisé n'a pas lieu lors du fonctionnement en ligne.

2. Procédé selon la revendication 1, caractérisé en ce que, pour le fonctionnement hors-circuit ou autonome d'un compartiment à étoffe filtrante, l'acheminement d'alimentation correspondant en gaz brut, et éventuellement le départ correspondant de gaz épuré, sont fermés et, pendant ce temps, une partie des manches ou la totalité des manches du filtre à étoffe filtrante est nettoyée et dépoussiérée d'une façon connue en soi.

3. Procédé selon les revendications 1 et 2, caractérisé en ce que, pour maintenir le rapport imposé entre le recyclage de la poussière et l'adsorbant frais, le cycle du fonctionnement hors-circuit (autonome)/en ligne ou en circuit est choisi de façon que, par nettoyage par dépoussiérage d'une quantité partielle déterminée des tubes souples ou manches présents dans un compartiment, il y a sortie d'une quantité de poussière exactement égale à la quantité d'adsorbant frais introduite pendant la durée du fonctionnement en ligne ou en circuit.

4. Dispositif pour la mise en oeuvre du procédé selon les revendications 1 et 2 comportant des filtres à manches prévus dans les divers compartiments (2a-2f) à étoffe filtrante avec plusieurs manches filtrantes entourant un espace libre central (20), un compartiment (4) supérieur de gaz propre et une sortie inférieure (69) de la poussière, avec à l'intérieur de l'espace libre (20) et à une certaine distance du compartiment (4) de gaz propre, une cheminée collectrice (9) associée à une buse (41) prolongeant un canal de gaz brut et située symétriquement et à une certaine distance et, au-dessous de la cheminée de collecte (9), étant prévu un fond (12) incliné comportant une ouverture (28), dispositif caractérisé en ce que le fond incliné (40) est fermement relié, dans la zone de son ouverture, à la buse (41), un sas de sortie (43) et une commande pour le fonctionnement autonome (ou hors-circuit)/en ligne ou en circuit étant prévues dans la partie inférieure du canal (42) de gaz brut.
